# FASCICULE DE BREVET EUROPEEN

(11) **EP 2 727 502 B1**
(45) Date de publication et mention de la délivrance du brevet: **16.09.2015**
(21) Numéro de dépôt: 13187279.8
(22) Date de dépôt: 03.10.2013
(51) Int. Cl.: A47J 19/06

(54) **Appareil électroménager de préparation culinaire comportant une vis de pressage guidée axialement**
Elektrohaushaltsgerät zur Essenszubereitung, das eine axial geführte Pressschraube umfasst
Kitchen appliance comprising an axially guided pressing screw

(30) Priorité: 30.10.2012 FR 1260384
(43) Date de publication de la demande: 07.05.2014
(73) Titulaire: SEB S.A., 69130 Ecully (FR)
(72) Inventeur: Peyras, Lionel, 65100 LOURDES (FR); Delavaud, Fabien, 64510 BALIROS (FR); Raude, Christian, 64160 BUROS (FR); Suberbie, Nicolas, 65360 MOMERES (FR); Ginestet, David, 65000 TARBES (FR)
(74) Mandataire: Cémeli, Eric Philippe Laurent

(56) Documents cités:
- EP-A1- 1 903 094
- WO-A1-2011/077038

## Description

La présente invention concerne le domaine technique des appareils électroménagers de préparation culinaire pour extraire des jus ou des coulis à partir de fruits et/ou de légumes.

La présente invention concerne plus particulièrement les appareils électroménagers de préparation culinaire comportant une vis de pressage guidée axialement dans un couvercle.

Le document WO 2011/077038 divulgue un appareil électroménager de préparation culinaire prévu pour le pressage d'aliments, comportant un filtre bloqué axialement par rapport à un couvercle, une vis de pressage agencée dans le filtre, dans lequel la vis de pressage présente une tête axiale logée dans un palier monté dans le couvercle. La vis de pressage entrainée en rotation dans le filtre exerce des efforts verticaux importants sur le couvercle, pouvant générer des phénomènes d'échauffement importants au niveau de la tête axiale et du palier.

Un objet de la présente invention est de proposer un appareil du type précité présentant une construction robuste adaptée à un usage prolongé et/ou intensif.

Un autre objet de la présente invention est de proposer un appareil du type précité présentant une construction robuste, qui reste simple et d'un coût modéré.

Ces objets sont atteints avec un appareil électroménager de préparation culinaire pour le pressage d'aliments, comportant une enceinte de travail logeant une tête de pressage comprenant une vis de pressage entrainée en rotation dans un filtre bloqué axialement par un couvercle de l'enceinte de travail, la tête de pressage comportant une tête axiale logée dans un palier monté dans le couvercle, du fait que la tête axiale présente une extrémité métallique reposant sur une surface d'appui métallique disposée au fond du palier. Cette disposition permet d'obtenir un appui axial de la tête de pressage résistant aux efforts exercés par la vis de pressage et limitant les échauffements.

Avantageusement, l'extrémité métallique de la tête axiale est hémisphérique ou ogivale. Ces dispositions permettent de limiter la surface axiale de contact de la tête axiale avec la surface d'appui métallique.

Avantageusement encore, la surface d'appui métallique est plane. Cette disposition permet de simplifier la réalisation du palier.

Avantageusement encore, l'extrémité métallique de la tête axiale présente une dureté supérieure ou égale à 50 HRC. Cette disposition permet de résister aux efforts exercés sur la surface d'appui métallique.

Selon une forme de réalisation avantageuse, l'extrémité métallique de la tête axiale est réalisée en acier inoxydable, notamment en acier inoxydable martensitique.

Selon une autre forme de réalisation avantageuse, au moins la partie de l'extrémité métallique de la tête axiale en contact avec la surface d'appui métallique présente un revêtement de chrome dur. Cette disposition permet notamment d'améliorer l'état de surface de l'extrémité métallique d'une tête axiale obtenue par usinage.

Avantageusement encore, la surface d'appui métallique présente une dureté supérieure ou égale à 50 HRC. Cette disposition permet de résister aux efforts exercés par la tête axiale.

Selon une forme de réalisation avantageuse, la surface d'appui métallique est réalisée en acier inoxydable, notamment en acier inoxydable martensitique.

Selon une autre forme de réalisation avantageuse, au moins la partie de la surface d'appui métallique en contact avec l'extrémité métallique de la tête axiale présente un revêtement de chrome dur.

Avantageusement alors, la dureté de la surface d'appui métallique est inférieure à la dureté de l'extrémité métallique de la tête axiale.

Selon un mode de réalisation, le palier comporte un corps tubulaire en matière plastique surmoulé sur un insert formant la surface d'appui métallique. Ainsi l'insert est disposé au fond du palier.

Avantageusement alors, l'insert présente au moins une perforation et/ou au moins une encoche périphérique. Ces dispositions facilitent la manipulation de l'insert lors de l'opération de surmoulage.

Selon un autre mode de réalisation, le palier comporte un corps tubulaire métallique formant la surface d'appui métallique.

Avantageusement encore, la tête axiale est insérée dans un moyeu supérieur de la tête de pressage. En alternative, l'extrémité métallique de la tête axiale pourrait notamment être rapportée sur une protubérance axiale du moyeu supérieur de la vis de pressage.

Avantageusement alors, le moyeu supérieur porte une rondelle de reprise d'effort autour de la tête axiale. Cette disposition permet de mieux répartir les efforts exercés par la tête axiale sur le moyeu supérieur. Cette disposition permet aussi de réduire la section et/ou la hauteur de la tête axiale.

Avantageusement alors, la tête axiale est insérée en force dans la rondelle de reprise d'effort. Cette disposition permet d'obtenir un montage simple et robuste.

Avantageusement encore, la rondelle de reprise d'effort est montée dans un logement supérieur du moyeu supérieur. Cette disposition permet d'améliorer le maintien de la rondelle de reprise d'effort.

Selon un mode de réalisation, l'enceinte de travail est montée sur un boîtier motorisé présentant une sortie d'entraînement pour entraîner en rotation la tête de pressage disposée dans l'enceinte de travail. Avantageusement, l'enceinte de travail est montée amovible sur le boîtier motorisé. En alternative, une partie de l'enceinte de travail pourrait notamment être solidaire du boîtier motorisé.

L'invention sera mieux comprise à l'étude d'un exemple de réalisation et de trois variantes, pris à titre nullement limitatif, illustrés dans les figures annexées, dans lesquelles :
- la figure 1 illustre un exemple d'appareil électroménager de préparation culinaire selon l'invention, représenté en élévation et en éclaté,
- la figure 2 est une vue en coupe verticale de l'appareil électroménager de préparation culinaire illustré sur la figure 1, comportant l'un des filtres,
- la figure 3 est une vue agrandie en coupe de l'appui axial de la tête de pressage de l'appareil illustré sur les figures 1 et 2,
- la figure 4 est une vue en perspective de la tête axiale de la tête de pressage de l'appareil illustré sur les figures 1 à 3,
- la figure 5 est une vue de dessus d'un insert agencé dans le palier de l'appareil illustré sur les figures 1 à 3,
- la figure 6 est une vue en perspective de dessous du couvercle de l'appareil illustré sur les figures 1 à 3,
- la figure 7 est une variante de réalisation d'un appui axial de la tête de pressage de l'appareil illustré sur les figures 1 à 3,
- les figures 8 et 9 sont deux variantes de réalisation d'une enceinte de travail d'un appareil selon l'invention.

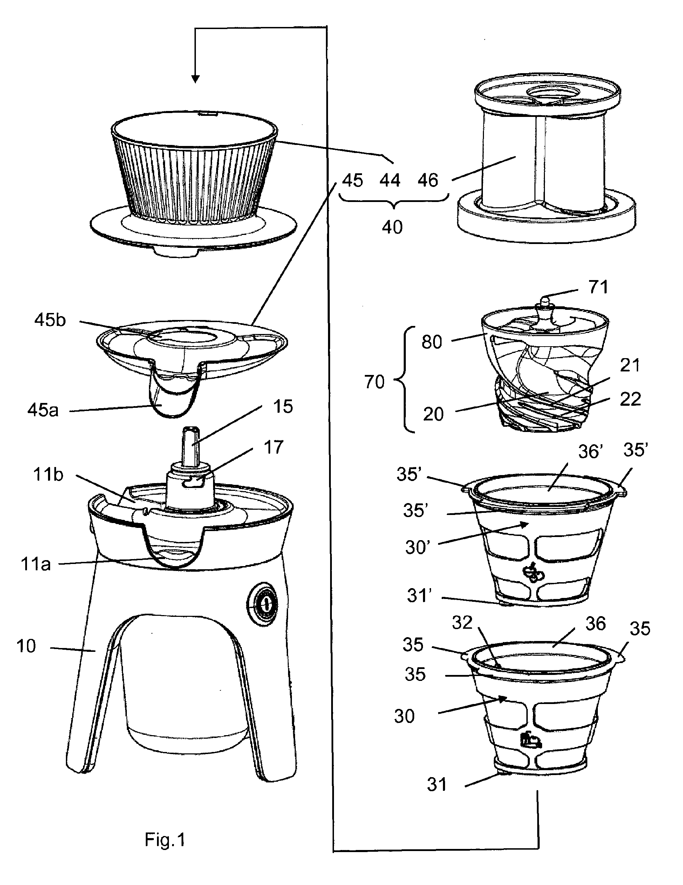

L'appareil électroménager de préparation culinaire pour le pressage d'aliments illustré sur la figure 1 comporte un boîtier motorisé 10, une enceinte de travail 40, au moins un filtre 30, 30', une tête de pressage 70 pouvant être agencée dans le filtre 30, 30'. Les filtres 30 ; 30' illustrés sur la figure 1 sont interchangeables et comportent par exemple des parties filtrantes plus ou moins fines, pour extraire des jus non pulpeux ou des jus pulpeux.

La tête de pressage 70 comprend une vis de pressage 20 prolongée en son extrémité supérieure par un disque de prédécoupe 80. La vis de pressage 20 présente sur sa périphérie plusieurs filets inclinés 21, 22.

L'enceinte de travail 40 comporte une sortie d'évacuation d'aliments filtrés 45a et une sortie d'évacuation de résidus 45b. La sortie d'évacuation de résidus 45b communique avec l'espace intérieur du filtre 30 ; 30' entourant la vis de pressage 20. La sortie d'évacuation d'aliments filtrés 45a communique avec l'espace interne de l'enceinte de travail 40 à l'extérieur du filtre 30 ; 30'. Ainsi la sortie d'évacuation d'aliments filtrés 45a est agencée à l'extérieur du filtre 30 ; 30'. Le filtre 30 ; 30' comporte une sortie de décharge de résidus 31 ; 31' communiquant avec une zone intérieure du filtre 30 ; 30', disposée à l'extérieur de la vis de pressage 20 agencée dans l'enceinte de travail 40. La sortie de décharge de résidus 31 ; 31' est disposée à l'aplomb de la sortie d'évacuation de résidus 45b lorsque le filtre 30 ; 30' est disposé dans l'enceinte de travail 40.

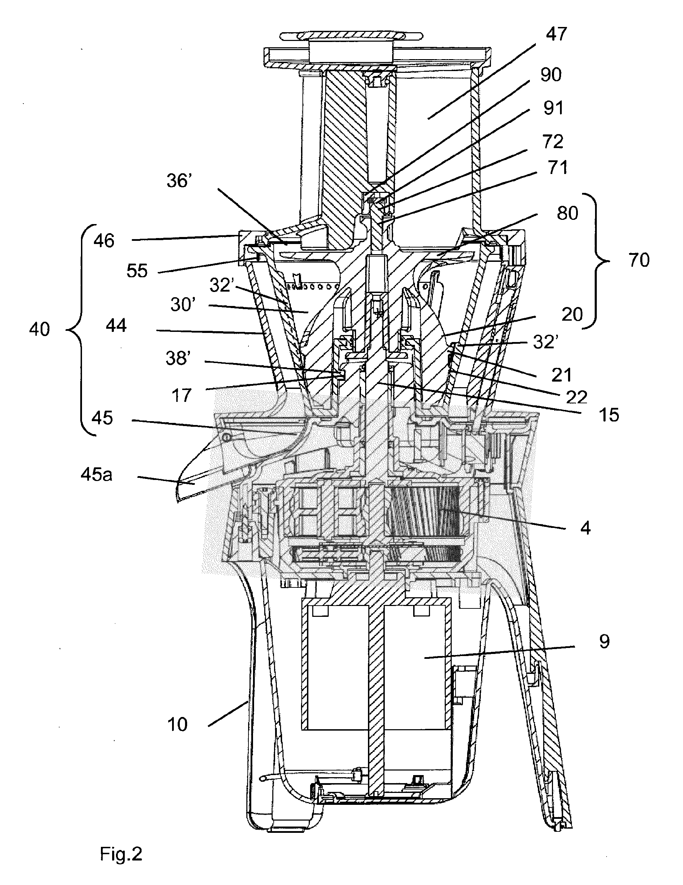

Dans l'exemple de réalisation illustré sur les figures, l'enceinte de travail 40 est montée amovible sur le boîtier motorisé 10. Le boîtier motorisé 10 présente une sortie d'entraînement 15 pour entraîner en rotation la tête de pressage 70 disposée dans l'enceinte de travail 40. Le boîtier motorisé 10 forme un socle sur lequel repose l'enceinte de travail 40. Le boîtier 10 loge un moteur 9 électrique, représenté schématiquement sur la figure 2. Le moteur 9 est relié à la sortie d'entrainement 15, si désiré par l'intermédiaire d'un dispositif de transmission 4. L'enceinte de travail 40 comporte un récepteur de jus inférieur 45, un déflecteur de jus 44 et un couvercle 46. La sortie d'évacuation d'aliments filtrés 45a est formée sur le récepteur de jus inférieur 45. La sortie d'évacuation de résidus 45b est formée dans le récepteur de jus inférieur 45. Le boîtier motorisé 10 comporte une échancrure 11a prévue pour recevoir la sortie d'évacuation d'aliments filtrés 45a. Le boîtier motorisé 10 présente une autre échancrure 11 b agencée en dessous de la sortie d'évacuation de résidus 45b, prévue pour recevoir les résidus de pressage issus de la sortie de décharge de résidus 31 ; 31' du filtre 30 ; 30' agencé dans l'enceinte de travail 40.

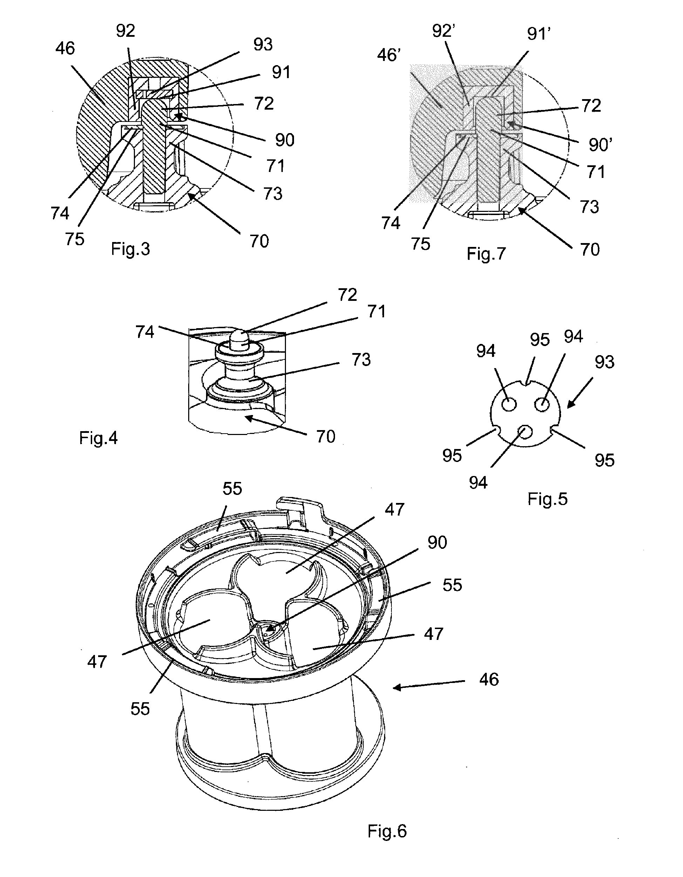

Le boitier motorisé 10 présente des empreintes 17 prévues pour recevoir des ergots primaires 38' du filtre 30, 30'. Le filtre 30 ; 30' est ainsi directement monté et verrouillé dans les empreintes 17 du boîtier motorisé 10 avec un montage de type baïonnette. Le filtre 30 ; 30' est ainsi bloqué en rotation et en translation sur le boîtier motorisé 10. Le récepteur de jus inférieur 45 agencé entre le boîtier motorisé 10 et le filtre 30 ; 30', est bloqué en rotation par l'échancrure 11a et en translation par le filtre 30 ; 30', de sorte qu'il est correctement maintenu en place sur le boîtier motorisé 10. Le couvercle 46 est monté directement sur le filtre 30 ; 30', par l'intermédiaire d'ergots secondaires 35, 35' du filtre 30 ; 30', qui coopèrent avec des nervures 55 du couvercle 46, visibles également sur la figure 6. Le couvercle 46 est ainsi verrouillé avec un montage de type baïonnette sur le filtre 30 ; 30'. Le couvercle 46 comporte au moins une goulotte 47 communiquant avec l'intérieur de l'enceinte de travail 40. L'enceinte de travail 40 loge ainsi la tête de pressage 70 comprenant la vis de pressage 20 entrainée en rotation dans le filtre 30 ; 30' bloqué axialement par le couvercle 46 de l'enceinte de travail 40.

Le filtre 30 ; 30', présente une ouverture 36 ; 36' pour la mise en place de la tête de pressage 70. L'ouverture 36 ; 36' est agencée en regard du couvercle 46. Ainsi, le couvercle 46 est assemblé et verrouillé avec le filtre 30 ; 30' pour former une enceinte de filtration contenant la tête de pressage 70. Le filtre 30 ; 30' présente des nervures internes 32 ; 32' prévues pour coopérer avec les filets inclinés 21, 22 de la vis de pressage 20.

Tel que visible sur la figure 2, le boîtier motorisé 10 forme un socle sur lequel repose l'enceinte de travail 40. Le boîtier 10 loge un moteur 9 électrique, représenté schématiquement. Le moteur 9 est relié à la sortie d'entrainement 15, si désiré par l'intermédiaire d'un dispositif de transmission 4.

Tel que mieux visible sur la figure 3, la tête de pressage 70 comporte une tête axiale 71 logée dans un palier 90 monté dans le couvercle 46. Le palier 90 présente avantageusement une ouverture chanfreinée. Le palier 90 présente de préférence un jeu de plus de 1/10^{e} de mm avec la tête axiale 71, par exemple un jeu de l'ordre de 0,5 mm.

Plus particulièrement selon l'invention, la tête axiale 71 comporte une extrémité métallique 72 reposant sur une surface d'appui métallique 91 disposée au fond du palier 90.

Dans l'exemple de réalisation illustré sur les figures 1 à 5, la surface d'appui métallique 91 est plane, et l'extrémité métallique 72 de la tête axiale 71 est hémisphérique. A titre de variante, la surface d'appui métallique 91 pourrait notamment être convexe, pour réaliser un appui axial ponctuel avec l'extrémité métallique 72 de la tête axiale 71. A titre de variante encore, l'extrémité métallique 72 de la tête axiale 71 pourrait notamment être ogivale.

Plus particulièrement, tel que mieux visible sur la figure 3, le palier 90 comporte un corps tubulaire 92 en matière plastique surmoulé sur un insert 93 formant la surface d'appui métallique 91. L'insert 93 présente avantageusement au moins une perforation 94 et/ou au moins une encoche périphérique 95, par exemple trois perforations 94 agencées à 120° et/ou trois encoches périphériques 95 agencées à 120°, tel que représenté sur la figure 5. Ainsi la partie axiale de la surface d'appui métallique 91 en contact avec l'extrémité métallique 72 de la tête axiale 71 est dépourvue de perforations 94. L'utilisation d'une matière plastique pour réaliser le corps tubulaire 92 permet de faciliter la dissipation des échauffements du palier 90 et de limiter la température dans la matière du couvercle 46. Du fait des échauffements, une matière plastique présentant une bonne tenue en température est préférée pour réaliser le corps tubulaire 92. Le corps tubulaire 92 est par exemple réalisé en PA 6-6 chargé fibres. La surface d'appui métallique 91 présente de préférence une dureté supérieure ou égale à 50 HRC. La surface d'appui métallique 91 est par exemple réalisée en acier inoxydable, notamment en acier inoxydable martensitique.

L'extrémité métallique 72 de la tête axiale 71 présente de préférence une dureté supérieure ou égale à 50 HRC. L'extrémité métallique 72 de la tête axiale 71 est par exemple réalisée en acier inoxydable, notamment en acier inoxydable martensitique.

Dans la forme de réalisation préférée illustrée sur les figures, la tête axiale 71 est métallique. Tel que représenté sur les figures 3 et 4, la tête axiale 71 est insérée dans un moyeu supérieur 73 de la tête de pressage 70. Le moyeu supérieur 73 porte une rondelle de reprise d'effort 74 autour de la tête axiale 71. La tête axiale 71 est avantageusement insérée en force dans la rondelle de reprise d'effort 74. La rondelle de reprise d'effort 74 est par exemple réalisée en acier inoxydable. Tel que bien visible sur la figure 3, la rondelle de reprise d'effort 74 est montée dans un logement supérieur 75 du moyeu supérieur 73. En alternative, la tête de pressage 70 pourrait notamment être surmoulée sur la tête axiale 71.

Selon une forme de réalisation avantageuse, la tête axiale 71 peut faire l'objet d'un traitement de type chrome dur, pour limiter les phénomènes d'usure. Au moins la partie de l'extrémité métallique 72 de la tête axiale 71 en contact avec la surface d'appui métallique 91 présente alors un revêtement de chrome dur. Cette disposition permet notamment d'améliorer l'état de surface de l'extrémité métallique 72 lorsque la tête axiale est obtenue par usinage. Une dureté d'environ 70 HRC peut être obtenue avec un revêtement de chrome dur présentant une épaisseur comprise entre 30 µm et 100 µm. De préférence, le traitement de type chrome dur concerne au moins la partie de la tête axiale 71 émergeant du moyeu supérieur 73, avant l'insertion dans ledit moyeu supérieur 73. Si désiré, ce traitement peut concerner également au moins une partie de la tête axiale 71 insérée dans le moyeu supérieur 73.

Avantageusement alors, l'insert 93 peut également faire l'objet d'un traitement de type chrome dur. Au moins la partie de la surface d'appui métallique 91 en contact avec l'extrémité métallique 72 de la tête axiale 71 présente alors un revêtement de chrome dur. De préférence, la dureté de la surface d'appui métallique est inférieure à la dureté de l'extrémité métallique de la tête axiale.

L'appareil selon l'invention s'utilise et fonctionne de la manière suivante.

L'utilisateur met en place le récepteur de jus inférieur 45 sur le boîtier motorisé 10, puis le déflecteur de jus 44 sur le récepteur de jus inférieur 45. L'utilisateur verrouille ensuite le filtre 30 ; 30' sur le boîtier motorisé 10, met en place la tête de pressage 70 dans le filtre 30 ; 30' par l'ouverture 36 ; 36', puis verrouille le couvercle 46 sur le filtre 30 ; 30'. La tête axiale 71 de la tête de pressage 70 est alors engagée dans le palier 90 du couvercle 46. Les aliments introduits dans l'enceinte de travail 40 par la goulotte 47 sont pressés par la vis de pressage 20 contre les parois latérales du filtre 30 ; 30'. Les filets inclinés 21, 22 de la vis de pressage 20 coopérant avec les nervures internes 32 ; 32' du filtre 30 ; 30' exercent un effort axial repoussant la vis de pressage 20 contre le couvercle 46. Une forte pression est ainsi exercée par l'extrémité métallique 72 de la tête axiale 71 sur la surface d'appui métallique 91. L'appui axial entre l'extrémité métallique 72 de la tête axiale 71 et la surface d'appui métallique 91 permet de réduire les surfaces de frottement. L'utilisation d'appuis métalliques permet d'obtenir une construction durable et économique réduisant les échauffements.

La figure 7 illustre une variante de réalisation dans laquelle la tête axiale 71 est logée dans un palier 90' monté dans un couvercle 46', l'extrémité métallique 72 de la tête axiale 71 reposant sur une surface d'appui métallique 91' disposée au fond du palier 90'. Le couvercle 46' diffère du couvercle 46 en ce que le palier 90' comporte un corps tubulaire 92' métallique formant la surface d'appui métallique 91'. Le corps tubulaire 92' est par exemple réalisé en acier inoxydable, de préférence en acier inoxydable martensitique. La matière du couvercle 46' entourant le palier 90' est alors choisie pour résister aux échauffements du palier 90', une matière plastique telle que le PBT peut par exemple être envisagée.

A titre de variante, la tête axiale 71 n'est pas nécessairement entièrement métallique. Notamment, l'extrémité métallique 72 de la tête axiale 71 pourrait être rapportée sur une protubérance axiale du moyeu supérieur 73 de la tête de pressage 70.

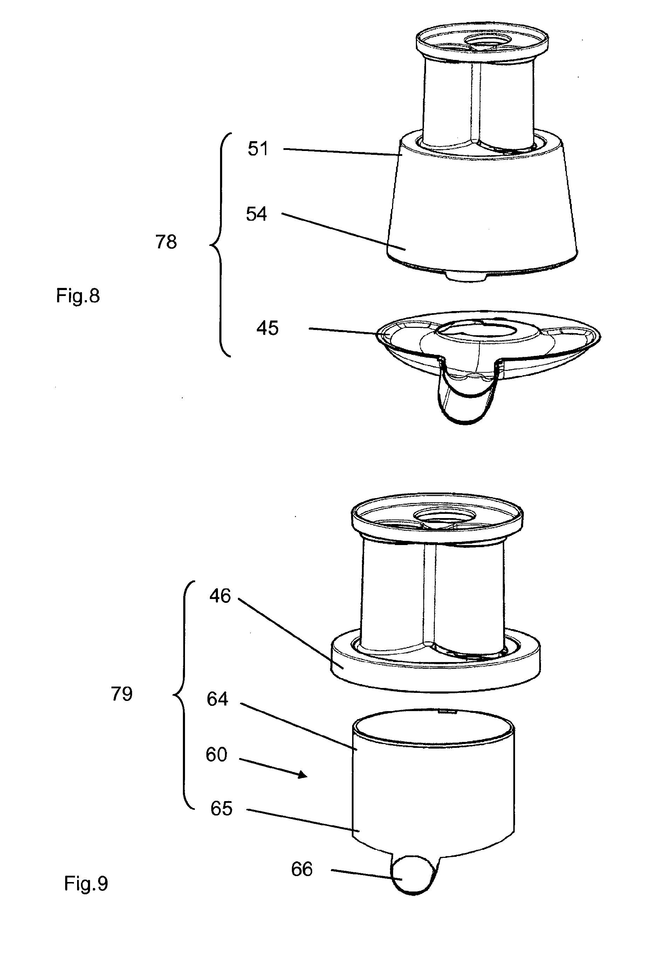

A titre de variante, l'enceinte de travail 40 ne comporte pas nécessairement un déflecteur de jus 44 indépendant. La figure 8 illustre un couvercle 51 intégrant un déflecteur de jus 54. Le couvercle 51 peut être utilisé avec le récepteur de jus inférieur 45 pour former une enceinte de travail 78 logeant la tête de pressage 70 comprenant la vis de pressage 20 entrainée en rotation dans le filtre 30 ; 30' bloqué axialement par le couvercle 51. Le filtre 30 ; 30' est alors verrouillé avec le couvercle 51. Le déflecteur de jus 54 est posé sur le récepteur de jus inférieur 45.

A titre de variante, l'enceinte de travail 40 ne comporte pas nécessairement un couvercle 46 verrouillé sur le filtre 30 ; 30'. La figure 9 illustre un récipient de travail 60 intégrant un déflecteur de jus 64 et un récepteur de jus inférieur 65 présentant au moins une sortie d'évacuation d'aliments filtrés 66. Le récipient de travail 60 peut être utilisé avec le couvercle 46 pour former une enceinte de travail 79 logeant la tête de pressage 70 comprenant la vis de pressage 20 entrainée en rotation dans le filtre 30 ; 30' bloqué axialement par le couvercle 46.

A titre de variante, la tête de pressage 70 peut être dépourvue de disque de prédécoupe 80, ou encore comporter un disque de prédécoupe indépendant de la vis de pressage 20.

La présente invention n'est nullement limitée aux exemples de réalisation décrits, mais englobe de nombreuses modifications dans le cadre des revendications.

## Revendications

1. Appareil électroménager de préparation culinaire pour le pressage d'aliments, comportant une enceinte de travail (40 ; 78 ; 79) logeant une tête de pressage (70) comprenant une vis de pressage (20) entrainée en rotation dans un filtre (30 ; 30') bloqué axialement par un couvercle (46 ; 46' ; 51) de l'enceinte de travail (40 ; 78 ; 79), la tête de pressage (70) comportant une tête axiale (71) logée dans un palier (90 ; 90') monté dans le couvercle (46 ; 46' ; 51), **caractérisé en ce que** la tête axiale (71) présente une extrémité métallique (72) reposant sur une surface d'appui métallique (91 ; 91') disposée au fond du palier (90 ; 90').

2. Appareil électroménager de préparation culinaire pour le pressage d'aliments selon la revendication 1, **caractérisé en ce que** l'extrémité métallique (72) de la tête axiale (71) est hémisphérique ou ogivale.

3. Appareil électroménager de préparation culinaire pour le pressage d'aliments selon l'une des revendications 1 ou 2, **caractérisé en ce que** la surface d'appui métallique (91 ; 91') est plane.

4. Appareil électroménager de préparation culinaire pour le pressage d'aliments selon l'une des revendications 1 à 3, **caractérisé en ce que** l'extrémité métallique (72) de la tête axiale (71) présente une dureté supérieure ou égale à 50 HRC.

5. Appareil électroménager de préparation culinaire pour le pressage d'aliments selon l'une des revendications 1 à 4, **caractérisé en ce que** l'extrémité métallique (72) de la tête axiale (71) est réalisée en acier inoxydable, notamment en acier inoxydable martensitique.

6. Appareil électroménager de préparation culinaire pour le pressage d'aliments selon l'une des revendications 1 à 5, **caractérisé en ce que** la surface d'appui métallique (91 ; 91') présente une dureté supérieure ou égale à 50 HRC.

7. Appareil électroménager de préparation culinaire pour le pressage d'aliments selon l'une des revendications 1 à 6, **caractérisé en ce que** la la surface d'appui métallique (91 ; 91') est réalisée en acier inoxydable notamment en acier inoxydable martensitique.

8. Appareil électroménager de préparation culinaire pour le pressage d'aliments selon l'une des revendications 1 à 7, **caractérisé en ce que** le palier (90) comporte un corps tubulaire (92) en matière plastique surmoulé sur un insert (93) formant la surface d'appui métallique (91).

9. Appareil électroménager de préparation culinaire pour le pressage d'aliments selon la revendication 8, **caractérisé en ce que** l'insert (93) présente au moins une perforation (94) et/ou au moins une encoche périphérique (95).

10. Appareil électroménager de préparation culinaire pour le pressage d'aliments selon l'une des revendications 1 à 7, **caractérisé en ce que** le palier (90') comporte un corps tubulaire (92') métallique formant la surface d'appui métallique (91').

11. Appareil électroménager de préparation culinaire pour le pressage d'aliments selon l'une des revendications 1 à 10, **caractérisé en ce que** la tête axiale (71) est insérée dans un moyeu supérieur (73) de la tête de pressage (70).

12. Appareil électroménager de préparation culinaire pour le pressage d'aliments selon la revendication 11, **caractérisé en ce que** le moyeu supérieur (73) porte une rondelle de reprise d'effort (74) autour de la tête axiale (71).

13. Appareil électroménager de préparation culinaire pour le pressage d'aliments selon la revendication 12, **caractérisé en ce que** la tête axiale (71) est insérée en force dans la rondelle de reprise d'effort (74).

14. Appareil électroménager de préparation culinaire pour le pressage d'aliments selon l'une des revendications 12 ou 13, **caractérisé en ce que** la rondelle de reprise d'effort (74) est montée dans un logement supérieur (75) du moyeu supérieur (73).

15. Appareil électroménager de préparation culinaire selon l'une des revendications 1 à 14, **caractérisé en ce que** l'enceinte de travail (40 ; 78 ; 79) est montée sur un boîtier motorisé (10) présentant une sortie d'entraînement (15) pour entraîner en rotation la tête de pressage (70) disposée dans l'enceinte de travail (40 ; 78 ; 79).

## Patentansprüche

1. Elektrohaushaltsgerät zur Zubereitung von Speisen für das Pressen von Nahrungsmitteln mit einem Arbeitsraum (40, 78, 79), in dem ein Presskopf (70) mit einer Pressschraube (20) untergebracht ist, die in einem Filter (30, 30') in Drehung versetzt wird, der von einem Deckel (46, 46', 51) des Arbeitsraums (40, 78, 79) axial blockiert wird, wobei der Presskopf (70) einen axialen Kopf (71) umfasst, der in einem Lager (90, 90') sitzt, das in dem Deckel (46, 46', 51) angebracht ist, **dadurch gekennzeichnet, dass** der axiale Kopf (71) ein Metallende (72) aufweist, das auf einer Metallauflagefläche (91, 91') ruht, die sich am Boden des Lagers (90, 90') befindet.

2. Elektrohaushaltsgerät zur Zubereitung von Speisen für das Pressen von Nahrungsmitteln nach Anspruch 1, **dadurch gekennzeichnet, dass** das Metallende (72) des axialen Kopfes (71) halbkugel- oder spitzbogenförmig ist.

3. Elektrohaushaltsgerät zur Zubereitung von Speisen für das Pressen von Nahrungsmitteln nach Anspruch 1 oder 2, **dadurch gekennzeichnet, dass** die Metallauflagefläche (91, 91') eben ist.

4. Elektrohaushaltsgerät zur Zubereitung von Speisen für das Pressen von Nahrungsmitteln nach einem der Ansprüche 1 bis 3, **dadurch gekennzeichnet, dass** das Metallende (72) des axialen Kopfes (71) eine Härte von größer oder gleich 50 HRC aufweist.

5. Elektrohaushaltsgerät zur Zubereitung von Speisen für das Pressen von Nahrungsmitteln nach einem der Ansprüche 1 bis 4, **dadurch gekennzeichnet, dass** das Metallende (72) des axialen Kopfes (71) aus Edelstahl, insbesondere aus martensitischem Edelstahl, hergestellt ist.

6. Elektrohaushaltsgerät zur Zubereitung von Speisen für das Pressen von Nahrungsmitteln nach einem der Ansprüche 1 bis 5, **dadurch gekennzeichnet, dass** die Metallauflagefläche (91, 91') eine Härte von größer oder gleich 50 HRC aufweist.

7. Elektrohaushaltsgerät zur Zubereitung von Speisen für das Pressen von Nahrungsmitteln nach einem der Ansprüche 1 bis 6, **dadurch gekennzeichnet, dass** die Metallauflagefläche (91, 91') aus Edelstahl, insbesondere aus martensitischem Edelstahl, hergestellt ist.

8. Elektrohaushaltsgerät zur Zubereitung von Speisen für das Pressen von Nahrungsmitteln nach einem der Ansprüche 1 bis 7, **dadurch gekennzeichnet, dass** das Lager (90) einen rohrförmigen Körper (92) aus Kunststoff umfasst, der auf einen Einsatz (93) aufgeformt ist, der die Metallauflagefläche (91) bildet.

9. Elektrohaushaltsgerät zur Zubereitung von Speisen für das Pressen von Nahrungsmitteln nach Anspruch 8, **dadurch gekennzeichnet, dass** der Einsatz (93) zumindest ein Loch (94) und/oder zumindest eine Aussparung (95) am Umfang aufweist.

10. Elektrohaushaltsgerät zur Zubereitung von Speisen für das Pressen von Nahrungsmitteln nach einem der Ansprüche 1 bis 7, **dadurch gekennzeichnet, dass** das Lager (90') einen rohrförmigen Körper (92') aus Metall umfasst, der die Metallauflagefläche (91') bildet.

11. Elektrohaushaltsgerät zur Zubereitung von Speisen für das Pressen von Nahrungsmitteln nach einem der Ansprüche 1 bis 10, **dadurch gekennzeichnet, dass** der axiale Kopf (71) in eine obere Nabe (73) des Presskopfes (70) eingesetzt ist.

12. Elektrohaushaltsgerät zur Zubereitung von Speisen für das Pressen von Nahrungsmitteln nach Anspruch 11, **dadurch gekennzeichnet, dass** die obere Nabe (73) eine Kraftaufnahmescheibe (74) um den axialen Kopf (71) trägt.

13. Elektrohaushaltsgerät zur Zubereitung von Speisen für das Pressen von Nahrungsmitteln nach Anspruch 12, **dadurch gekennzeichnet, dass** der axiale Kopf (71) in die Kraftaufnahmescheibe (74) eingepresst wird.

14. Elektrohaushaltsgerät zur Zubereitung von Speisen für das Pressen von Nahrungsmitteln nach einem der Ansprüche 12 oder 13, **dadurch gekennzeichnet, dass** die Kraftaufnahmescheibe (74) in eine obere Aufnahme (75) der oberen Nabe (73) montiert ist.

15. Elektrohaushaltsgerät zur Zubereitung von Speisen für das Pressen von Nahrungsmitteln nach einem der Ansprüche 1 bis 14, **dadurch gekennzeichnet, dass** der Arbeitsraum (40, 78, 79) auf ein Motorgehäuse (10) montiert ist, das einen Antriebsausgang (15) aufweist, um den in dem Arbeitsraum (40, 78, 79) befindlichen Presskopf (70) in Drehung zu versetzen.

## Claims

1. Domestic electrical food preparation apparatus for pressing foods, consisting of a working chamber (40 ; 78 ; 79) housing a pressing head (70) comprising a pressing screw (20) that rotates inside a filter (30 ; 30') locked axially by a lid (46 ; 46' ; 51) of the working chamber (40 ; 78 ; 79), the pressing head (70) consisting of an axial head (71) housed in a bearing (90 ; 90') mounted in the lid (46 ; 46' ; 51), **characterised by** the axial head (71) having a metal end piece (72) resting on a metal support surface (91 ; 91') in the bottom of the bearing (90 ; 90').

2. Domestic electrical food preparation apparatus for pressing foods according to claim 1, **characterised by** the metal end piece (72) of the axial head (71) being hemispherical or ogival.

3. Domestic electrical food preparation apparatus for pressing foods according to either claim 1 or claim 2, **characterised by** the metal support surface (91 ; 91') being flat.

4. Domestic electrical food preparation apparatus for pressing foods according to one of claims 1 to 3, **characterised by** the metal end piece (72) of the axial head (71) having a hardness of 50 HRC or over.

5. Domestic electrical food preparation apparatus for pressing foods according to one of claims 1 to 4, **characterised by** the metal end piece (72) of the axial head (71) being made of stainless steel, specifically martensitic stainless steel.

6. Domestic electrical food preparation apparatus for pressing foods according to one of claims 1 to 5, **characterised by** the metal support surface (91 ; 91') having a hardness of 50 HRC or over.

7. Domestic electrical food preparation apparatus for pressing foods according to one of claims 1 to 6, **characterised by** the metal support surface (91 ; 91') being made of stainless steel, specifically martensitic stainless steel.

8. Domestic electrical food preparation apparatus for pressing foods according to one of claims 1 to 7, **characterised by** the bearing (90) consisting of a tubular body (92) made of plastic moulded onto an insert (93) forming the metal support surface (91).

9. Domestic electrical food preparation apparatus for pressing foods according to claim 8, **characterised by** the insert (93) having at least one perforation (94) and/or at least one peripheral notch (95).

10. Domestic electrical food preparation apparatus for pressing foods according to one of claims 1 to 7, **characterised by** the bearing (90') consisting of a tubular metal body (92') forming the metal support surface (91').

11. Domestic electrical food preparation apparatus for pressing foods according to one of claims 1 to 10, **characterised by** the axial head (71) being inserted into an upper hub (73) of the pressing head (70).

12. Domestic electrical food preparation apparatus for pressing foods according to claim 11, **characterised by** the upper hub (73) having a thrust washer (74) around the axial head (71).

13. Domestic electrical food preparation apparatus for pressing foods according to claim 12, **characterised by** the axial head (71) being interference fitted into the thrust washer (74).

14. Domestic electrical food preparation apparatus for pressing foods according to one of claims 12 or 13, **characterised by** the thrust washer (74) being fitted in an upper housing (75) in the upper hub (73).

15. Domestic electrical food preparation apparatus according to one of claims 1 to 14, **characterised by** the working chamber (40 ; 78 ; 79) being mounted on a motorised housing (10) with a drive output (15) to rotate the pressing head (70) in the working chamber (40 ; 78 ; 79).
